# EUROPÄISCHE PATENTSCHRIFT

(11) **EP 3 107 717 B1**
(45) Veröffentlichungstag und Bekanntmachung des Hinweises auf die Patenterteilung: **18.12.2019**
(21) Anmeldenummer: 14705202.1
(22) Anmeldetag: 19.02.2014
(51) Int. Cl.: B29C 70/76, B29C 33/00, B29C 39/24

(54) **VORRICHTUNG UND VERFAHREN ZUR HERSTELLUNG EINER UMRANDUNG EINES FLÄCHIG AUSGEDEHNTEN PANELS**
DEVICE AND METHOD FOR PRODUCING AN EDGING OF A FLAT EXTENDED PANEL
DISPOSITIF ET PROCÉDÉ DE PRODUCTION D'UNE BORDURE D'UN PANNEAU ÉTENDU À PLAT

(43) Veröffentlichungstag der Anmeldung: 28.12.2016
(73) Patentinhaber: Webasto SE, 82131 Stockdorf (DE)
(72) Erfinder: WOKÖCK, Jan, 83053 Bad Aibling (DE); SEEBASS, Martin, 82131 Gauting (DE)
(74) Vertreter: Epping - Hermann - Fischer
(86) Internationale Anmeldenummer: PCT/EP2014/053244
(87) Internationale Veröffentlichungsnummer: WO 2015/124181

(56) Entgegenhaltungen:
- EP-A1- 0 634 263
- DE-C1- 4 232 554
- JP-A- H04 226 321

## Beschreibung

Die Erfindung betrifft Vorrichtungen zur Herstellung einer Umrandung eines flächig ausgedehnten Panels, insbesondere einer Umrandung einer Scheibe für ein Dach eines Fahrzeugs. Die Erfindung betrifft weiterhin Verfahren zur Herstellung einer Umrandung eines flächig ausgedehnten Panels, insbesondere einer Umrandung einer Scheibe für ein Dach eines Fahrzeugs.

Dächer von Fahrzeugen können eine Öffnung aufweisen, die mit einer Scheibe verschlossen wird. Solche Dachanordnungen werden auch Panoramadach genannt. Die Scheibe ist beispielsweise transparent oder teilweise transparent, sodass Licht von außerhalb des Fahrzeugs in das Innere gelangen kann und für die Fahrzeuginsassen ein Blick nach außen ermöglicht wird. Solche Scheiben können feststehende oder bewegliche Dachelemente beispielsweise aus Glas sein. Im Randbereich des Deckels ist eine Kunststoffumrandung vorgesehen, beispielsweise eine Umschäumung.

Die EP 1 577 080 beschreibt ein Verfahren zur Umschäumung einer Scheibe, bei dem ein offenes Formstück verwendet wird. Dadurch härtet eine Oberfläche der Umschäumung ohne Kontakt zu dem Formstück aus.

Die DE 42 32 554 C1 beschreibt ein Verfahren zur Herstellung eines Rahmenprofils an einer Glasscheibe, bei dem Polymer über einen Extruder auf die Glasscheibe aufgebracht wird.

Dabei wird der Extruder relativ zu der Glasscheibe am Rand der Glasscheibe entlang geführt.

Die EP 0 634 263 A1 beschreibt Verfahren zur Herstellung eines Rahmens für eine Scheibe. Ein Formwerkzeug weist Schieber auf, die relativ zueinander bewegbar sind.

Es ist wünschenswert, Vorrichtungen zur Herstellung einer Umrandung eines flächig ausgedehnten Panels anzugeben, die jeweils eine einfache und zuverlässige Herstellung ermöglichen. Zudem ist es wünschenswert, Verfahren zur Herstellung einer Umrandung eines flächig ausgedehnten Panels anzugeben, die jeweils einfach und zuverlässig durchführbar sind.

Gemäß eines Aspekts der Erfindung weist eine Vorrichtung zur Herstellung einer Umrandung eines flächig ausgedehnten Panels ein Formwerkzeug und einen Materialspender auf. Der Materialspender ist relativ zu dem Formwerkzeug bewegbar. Der Materialspender ist ausgebildet zum Aufspenden eines Materials für die Umrandung. Das Formwerkzeug weist einen ersten Formkörper mit einem Haltebereich für das Panel auf. Das Formwerkzeug weist einen zweiten Formkörper mit einem Haltebereich für das Panel auf. Das Panel ist von dem ersten und dem zweiten Formköper haltbar. Das Formwerkzeug weist einen dritten Formkörper auf, der mit dem ersten Formkörper einen gemeinsamen Kontaktbereich aufweist. Der erste, der zweite und der dritte Formkörper sind so ausgebildet, dass sie zusammen mit dem Panel einen Raum umgeben, in dem die Umrandung ausbildbar ist. Zwischen dem zweiten und dem dritten Formkörper ist ein Zugangskanal zu dem Raum ausgebildet. Der Zugangskanal ermöglicht insbesondere einen Zugang des Materialspenders zu dem Raum.

Das flächig ausgedehnte Panel ist insbesondere eine Scheibe, beispielsweise eine Glasscheibe oder eine Kunststoffscheibe. Das Panel ist beispielsweise transparent oder zumindest teilweise transparent. Das Panel dient beispielsweise im Betrieb als Deckel für eine Öffnung in einem Dach eines Fahrzeugs, insbesondere eines Personenkraftwagens.

Das Formwerkzeug zum Ausbilden der Umrandung weist drei Formkörper auf. Der Materialspender ist jeweils relativ zu den Formkörpern bewegbar. Die drei Formkörper umgeben gemeinsam den Raum, der die äußere Form der Umrandung nach dem Aushärten des Materials vorgibt. Durch ein Austauschen von einem der Formkörper und einem Beibehalten der beiden weiteren Formkörper ist somit einfach und unaufwendig eine Veränderung der äußeren Form der Umrandung möglich.

Beispielsweise werden die beiden Formkörper, die das Panel halten, beibehalten und der dritte Formkörper je nachdem welche Form der Umrandung gewünscht ist, bei jedem Panel oder für jeweils eine Serie von Paneelen entsprechend verändert. Beispielsweise ist eine Innenfläche des dritten Formkörpers so ausgebildet, dass eine Dichtlippe an der Umrandung entsteht. Die Innenfläche des dritten Formkörpers ist gemäß weiteren Ausführungsformen anders ausgebildet, beispielsweise so, dass eine Fläche zur Montage weiterer Elemente an der Umrandung entsteht.

Die drei Formkörper sind beispielsweise separat zueinander ausgebildet. Der zweite und der dritte Formkörper sind insbesondere relativ zueinander bewegbar angeordnet. Der zweite und der erste Formkörper sind gemäß Ausführungsformen relativ zueinander bewegbar angeordnet. Der zweite und der dritte Formkörper weisen insbesondere keine gemeinsame Kontaktfläche auf und sind insbesondere stets beabstandet zueinander angeordnet.

Eine elastische Lippendichtung ist an dem zweiten und/oder dem dritten Formkörper fixiert, um den Zugangskanal zu schließen und zeitweise freizugeben. Die Lippendichtung ist gemäß Ausführungsformen nur an dem zweiten Formkörper fixiert. Gemäß weiteren Ausführungsformen ist die elastische Lippendichtung nur an dem dritten Formkörper fixiert.

Gemäß weiteren Ausführungsformen ist die elastische Lippendichtung mehrteilig, beispielsweise zweiteilig. Ein Teil ist an dem zweiten Formkörper fixiert und ein weiterer Teil an dem dritten Formkörper.

Die Lippendichtung ist so ausgebildet, dass sie aus ihrer Ruheposition bewegbar ist, um den Zugangskanal für den Materialspender freizugeben. Insbesondere ist die Lippendichtung so ausgebildet, dass der Zugangskanal nur an einem Bereich freigegeben ist und außerhalb des Bereichs durch die Lippendichtung geschlossen ist. Nach dem Einbringen des Materials in dem Raum ist der Raum somit auch in dem Zugangskanal geschlossen. Das Formwerkzeug ist dann ein geschlossenes Formwerkzeug.

Gemäß weiteren Ausführungsformen weist die Vorrichtung alternativ oder zusätzlich zu der Lippendichtung ein separates Verschlusselement auf. Das Verschlusselement ist in den Zugangskanal einbringbar, um den Zugangskanal zu schließen. Das Verschlusselement ist ausgebildet, den Zugangskanal so zu schließen, dass der Raum ein geschlossener Raum ist. Nachdem das Material mittels des Materialspenders in den Raum eingebracht ist, ist der Raum geschlossen, da der Zugangskanal durch das Verschlusselement geschlossen ist. Somit ist ein geschlossenes Formwerkzeug gegeben. Das Verschlusselement ist separat zu den Formkörpern des Formwerkzeugs ausgebildet. Das Verschlusselement ist relativ zu den Formkörpern bewegbar und nicht an einem der Formkörper fixiert. Die Formkörper und das separate Verschlusselement sind zunächst getrennte Bauelemente. Das separate Verschlusselement ist erst in Kontakt mit einem der Formkörper oder beiden Formkörpern, nachdem das Material in den Raum eingebracht ist. Beispielsweise ist das Verschlusselement ein flexibles Dichtband. Das flexible Dichtband ist in den Zugangskanal einlegbar.

Gemäß weiteren Aspekten der Erfindung weist eine Vorrichtung zur Herstellung einer Umrandung eines flächig ausgedehnten Panels ein Formwerkzeug und einen Materialspender auf. Der Materialspender ist relativ zu dem Formwerkzeug bewegbar. Der Materialspender dient zum Aufspenden eines Materials für die Umrandung. Das Formwerkzeug weist einen ersten Formkörper mit einem Haltebereich für das Panel auf. Das Formwerkzeug weist einen zweiten Formkörper mit einem Haltebereich für das Panel auf. Das Panel ist von dem ersten und dem zweiten Formköper haltbar. Der erste und der zweite Formkörper sind so ausgebildet, dass sie zusammen mit dem Panel einen Raum umgeben, in dem die Umrandung ausbildbar ist. Das Formwerkzeug weist einen Zugangskanal zu dem Raum auf, der zwischen dem ersten und dem zweiten Formkörper ausgebildet ist. Ein separates Verschlusselement ist in den Zugangskanal einbringbar, um den Zugangskanal zu schließen, sodass der Raum ein geschlossener Raum ist. Der Zugangskanal ermöglicht insbesondere einen Zugang des Materialspenders zu dem Raum.

Das flächig ausgedehnte Panel ist insbesondere eine Scheibe, beispielsweise eine Glasscheibe oder eine Kunststoffscheibe. Das Panel ist beispielsweise transparent oder zumindest teilweise transparent. Das Panel dient beispielsweise im Betrieb als Deckel für eine Öffnung in einem Dach eines Fahrzeugs, insbesondere eines Personenkraftwagens.

Das separate Verschlusselement ist relativ zu dem ersten und dem zweiten Formkörper bewegbar. Das Verschlusselement ist separat zu den Formkörpern ausgebildet und nicht an einem der Formkörper fixiert. Die Formkörper und das Verschlusselement sind zunächst getrennte Bauelemente. Das Verschlusselement ist erst in Kontakt mit einem der Formkörper oder beiden Formkörpern, nachdem das Material in den Raum eingebracht ist. Das Verschlusselement ist beispielsweise ein flexibles Dichtband, das in den Zugangskanal einlegbar ist. Durch das Verschlusselement ist der Raum verschließbar. Der Raum ist durch das Panel, die beiden Formkörper und das Verschlusselement geschlossen.

Gemäß weiteren Aspekten der Erfindung weist eine Vorrichtung zur Herstellung einer Umrandung eines flächig ausgedehnten Panels ein Formwerkzeug und einen Materialspender auf, der relativ zu dem Formwerkzeug bewegbar ist. Der Materialspender dient zum Aufspenden eines Materials für die Umrandung. Das Formwerkzeug weist einen ersten Formkörper mit einem Haltebereich für das Panel auf. Das Formwerkzeug weist einen zweiten Formkörper mit einem Haltebereich für das Panel auf. Das Panel ist von dem ersten und dem zweiten Formköper haltbar. Der erste und der zweite Formkörper sind so ausgebildet, dass sie zusammen mit dem Panel einen Raum umgeben, in dem die Umrandung ausbildbar ist. Das Formwerkzeug weist ein bewegliches Verschlusselement auf, das an dem ersten und/oder dem zweiten Formkörper fixiert ist, um einen Zugangskanal zu schließen und zeitweise freizugeben. Die Vorrichtung weist weiterhin eine Öffnungsvorrichtung auf. Die Öffnungsvorrichtung ist separat zu dem Materialspender ausgebildet. Die Öffnungsvorrichtung ist ausgebildet, das Verschlusselement für das Freigeben des Zugangskanals zu bewegen. Der Zugangskanal ermöglicht insbesondere einen Zugang des Materialspenders zu dem Raum.

Das flächig ausgedehnte Panel ist insbesondere eine Scheibe, beispielsweise eine Glasscheibe oder eine Kunststoffscheibe.

Das Panel ist beispielsweise transparent oder zumindest teilweise transparent. Das Panel dient beispielsweise im Betrieb als Deckel für eine Öffnung in einem Dach eines Fahrzeugs, insbesondere eines Personenkraftwagens.

Das Verschlusselement ist unabhängig von dem Materialspender bewegbar. Das Verschlusselement ist durch die Öffnungsvorrichtung bewegbar, um den Zugangskanal für den Materialspender freizugeben. Der Materialspender ist ohne Kontakt zu dem Verschlusselement in den Zugangskanal einbringbar, um das Material in dem Raum einzubringen. Das Verschlusselement ist beispielsweise eine elastische Lippendichtung. Das Verschlusselement ist an dem ersten Formkörper und alternativ oder zusätzlich an dem zweiten Formkörper fixiert.

Beispielsweise umfasst die Öffnungsvorrichtung eine Druckluftvorrichtung, um das Verschlusselement mittels Druckluft zu bewegen. Alternativ oder zusätzlich umfasst die Öffnungsvorrichtung eine Magnetvorrichtung, um das Verschlusselement mittels Magnetkraft zu bewegen. Alternativ oder zusätzlich umfasst die Öffnungsvorrichtung eine Hebevorrichtung, die in Kontakt mit dem Verschlusselement gelangt, um das Verschlusselement mechanisch zu bewegen. Die Öffnungsvorrichtung umfasst gemäß weiteren Ausführungsformen alternativ oder zusätzlich eine oder mehrere weitere Vorrichtungen, die eingerichtet sind, das Verschlusselement zu bewegen, beispielsweise eine Vakuumvorrichtung, um das Verschlusselement durch ein Ansaugen zu bewegen.

Gemäß weiteren Aspekten der Erfindung umfasst ein Verfahren zur Herstellung einer Umrandung eines flächig ausgedehnten Panels ein Bereitstellen des Panels. Ein erster Formkörper wird bereitgestellt. Das Panel wird auf den ersten Formkörper aufgelegt. Ein zweiter Formkörper wird auf dem Panel angeordnet. Ein dritter Formkörper wird so angeordnet, dass der dritte Formkörper mit dem ersten Formkörper in Kontakt ist, wobei ein Raum zwischen dem ersten und dem zweiten und dem dritten Formkörper mit einem Zugangskanal zwischen dem zweiten und dem dritten Formkörper ausgebildet wird. Ein Material für die Umrandung wird durch den Zugangskanal in den Raum eingebracht mittels eines Materialspenders, der relativ zu dem Formwerkzeug bewegt wird. Durch das Anordnen von drei separaten Formkörpern ist eine flexible Gestaltung der Umrandung möglich. Die drei Formkörper werden relativ zu einander bewegt, um das Panel zu halten und den Raum auszubilden. Der zweite und der dritte Formkörper gelangen nicht in Kontakt miteinander. Eine Innenfläche des dritten Formkörpers dient zur Ausbildung der äußeren Form der Umrandung. Der dritte Formkörper dient nicht zum Halten des Panels.

Eine elastische Lippendichtung wird bewegt, die an dem zweiten und/oder dem dritten Formkörper fixiert ist. Dadurch wird der Zugangskanal freigegeben. Nachfolgend wird das Material durch den freigegebenen Zugangskanal eingebracht. Nachfolgend wird der Zugangskanal geschlossen. Insbesondere wird der Zugangskanal nur bereichsweise freigegeben, um ein Einbringen eines Materialspenders zu ermöglichen. Seitlich des Materialspenders und des freigegebenen Bereichs bleibt der Zugangskanal geschlossen. Der Materialspender bewegt sich relativ zu dem Panel und dem Formwerkzeug entlang eines Rands des Panels, um die Umrandung auszubilden. In Bewegungsrichtung des Materialspenders vor und nach dem Materialspender bleibt der Zugangskanal geschlossen. Der freigegebene Bereich bewegt sich mit dem Materialspender relativ zu dem Formwerkzeug. Beispielsweise wird die elastische Lippendichtung durch den Materialspender bewegt. Gemäß weiteren Ausführungsformen wird die elastische Lippendichtung mittels einer Öffnungsvorrichtung bewegt, die separat zu dem Materialspender ausgebildet ist.

Dadurch, dass der Zugangskanal außerhalb des freigegebenen Bereichs für den Materialspender geschlossen wird, ist ein geschlossener Raum für die Umrandung gegeben. Das eingebrachte Material für die Umrandung ist an allen Seiten in Kontakt mit Elementen des Formwerkzeugs. Dadurch ist die äußere Form der Umrandung präzise vorgebbar.

Gemäß weiteren Ausführungsformen wird alternativ oder zusätzlich zu der elastischen Lippendichtung ein separates Verschlusselement in den Zugangskanal eingelegt, nachdem das Material in den Raum eingebracht wurde. Das separate Verschlusselement schließt den Zugangskanal und dadurch wird der Raum geschlossen. Ein Materialspender bewegt sich relativ zu dem Formwerkzeug und dem Panel entlang einem Rand des Panels. Dabei wird Material für die Umrandung in den Raum aufgespendet. In Bewegungsrichtung des Materialspenders hinter dem Materialspender wird das separate Verschlusselement in den Zugangskanal eingelegt, um diesen zu schließen. Somit ist das Material für die Umrandung an allen Seiten in Kontakt mit einem Element des Formwerkzeugs. Beispielsweise umfasst das Einlegen des separaten Verschlusselements ein Einlegen eines flexiblen Dichtbands in den Zugangskanal.

Gemäß weiteren Aspekten der Erfindung umfasst ein Verfahren zur Herstellung einer Umrandung eines flächig ausgedehnten Panels ein Bereitstellen des Panels. Ein erster Formkörper wird bereitgestellt. Das Panel wird auf den ersten Formkörper aufgelegt. Ein zweiter Formkörpers wird auf dem Panel abgeordnet, wobei ein Raum zwischen dem ersten und dem zweiten Formkörper mit einem Zugangskanal zwischen dem ersten und dem zweiten Formkörper ausgebildet wird. Material für die Umrandung wird in den Raum durch den Zugangskanal eingebracht. Ein separates Verschlusselement wird in den Zugangskanal eingelegt, nachdem das Material in den Raum eingebracht wurde, um den Zugangskanal zu schließen. Dadurch wird der Raum geschlossen.

Beispielsweise wird ein flexibles Dichtband als Verschlusselement in den Zugangskanal eingelegt. Der Raum zwischen den Formkörpern ist zunächst an dem Zugangskanal offen. Das Material wird beispielsweise mittels eines Materialspenders in den Raum eingebracht. Der Materialspender wird relativ zu dem Formwerkzeug und dem Panel bewegt. In Bewegungsrichtung des Materialspenders hinter dem Materialspender wird das separate Verschlusselement in den Zugangskanal eingelegt. Dadurch wird der Raum geschlossen. Somit ist das Material für die Umrandung nachdem es in das Formwerkzeug eingebracht wurde, allseitig von dem Formwerkzeug umgeben. Somit ist die äußere Form der Umrandung präzise ausbildbar.

Gemäß weiteren Aspekten der Erfindung umfasst ein Verfahren zur Herstellung einer Umrandung eines flächig ausgedehnten Panels ein Bereitstellen des Panels. Ein erster Formkörper wird bereitgestellt. Das Panel auf den ersten Formkörper aufgelegt. Ein zweiter Formkörpers wird auf dem Panel angeordnet, wobei ein Raum zwischen dem ersten und dem zweiten Formkörper mit einem Zugangskanal zwischen dem ersten und dem zweiten Formkörper ausgebildet wird. Ein Verschlusselements wird bewegt, das an dem ersten und/oder dem zweiten Formkörper fixiert ist. Dadurch wird der Zugangskanals freigegeben. Das Verschlusselement wird mittels einer Öffnungsvorrichtung bewegt, die separat zu einem Materialspender zum Aufspenden eines Materials für die Umrandung ausgebildet ist. Das Material wird mittels des Materialspenders durch den freigegebenen Zugangskanal in den Raum eingebracht. Der Zugangskanal wird geschlossen.

Der Zugangskanal ist durch die Öffnungsvorrichtung unabhängig von dem Materialspender freigebbar. Insbesondere wird der Zugangskanal durch die Öffnungsvorrichtung nur bereichsweise freigegeben, um ein Einbringen des Materialspenders in dem freigegebenen Bereich zu ermöglichen. Vor und hinter dem freigegebenen Bereich ist der Zugangskanal geschlossen. Der Materialspender bewegt sich relativ zu dem Formwerkzeug und dem Panel entlang eines Rands des Panels um die Umrandung auszubilden. Die Öffnungsvorrichtung bewegt sich beispielsweise korrespondierend zu dem Materialspender, sodass sich der freigegebene Bereich entlang des Zugangskanals bewegt. In Bewegungsrichtung der Öffnungsvorrichtung beziehungsweise des Materialspenders vor und hinter dem Materialspender lässt die Öffnungsvorrichtung den Zugangskanal geschlossen. Dadurch ist das eingebrachte Material der Umrandung während des Aushärtens in dem Raum allseitig in Kontakt mit Elementen des Formwerkzeugs. Dadurch ist die äußere Form der Umrandung präzise herstellbar.

Die jeweiligen in Verbindung mit den einzelnen Vorrichtungen Bauelement angeführten Merkmale und Vorteile finden auch im Zusammenhang mit den weiteren Vorrichtungen und Verfahren Verwendung und umgekehrt.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können dabei mit den gleichen Bezugszeichen versehen sein. Die dargestellten Elemente und ihre Größenverhältnisse zueinander sind nicht zwingend maßstabsgerecht. Vielmehr können einzelne Elemente oder Bereiche zur besseren Darstellbarkeit übertrieben dick oder groß dargestellt sein.

Es zeigen:
Figur 1 eine schematische Darstellung eines Dachs eines Kraftfahrzeugs gemäß Ausführungsformen,
Figur 2 eine schematische Darstellung eines Querschnitts durch eine Vorrichtung zur Herstellung einer Umrandung gemäß Ausführungsformen,
Figur 3 eine schematische Darstellung eines Querschnitts durch eine Vorrichtung zur Herstellung einer Umrandung gemäß Ausführungsformen,
Figur 4 eine schematische Darstellung eines Querschnitts durch eine Vorrichtung zur Herstellung einer Umrandung gemäß Ausführungsformen,
Figur 5 eine schematische Darstellung eines Querschnitts durch eine Vorrichtung zur Herstellung einer Umrandung gemäß Ausführungsformen,
Figur 6 eine schematische Darstellung eines Querschnitts durch eine Vorrichtung zur Herstellung einer Umrandung gemäß Ausführungsformen,
Figur 7 eine schematische Darstellung eines Querschnitts durch eine Vorrichtung zur Herstellung einer Umrandung gemäß Ausführungsformen,
Figur 8 eine schematische Darstellung eines Querschnitts durch eine Vorrichtung zur Herstellung einer Umrandung gemäß Ausführungsformen,
Figur 9 eine schematische Darstellung eines Querschnitts durch eine Vorrichtung zur Herstellung einer Umrandung gemäß Ausführungsformen,
Figur 10 eine schematische Darstellung eines Querschnitts durch eine Vorrichtung zur Herstellung einer Umrandung gemäß Ausführungsformen,
Figur 11 eine schematische Darstellung eines Querschnitts durch eine Vorrichtung zur Herstellung einer Umrandung gemäß Ausführungsformen, und
Figur 12 eine schematische Darstellung einer Aufsicht auf eine Vorrichtung zur Herstellung einer Umrandung gemäß Ausführungsformen.

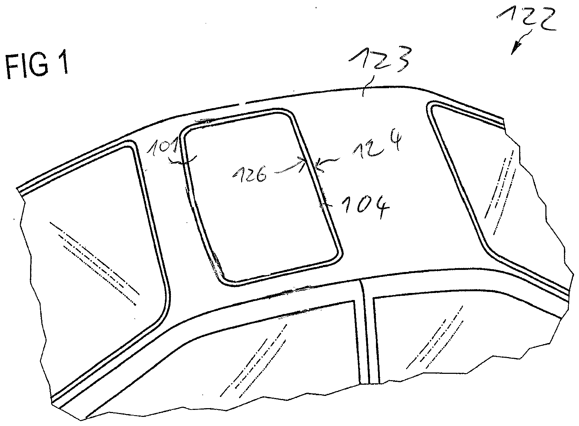

Figur 1 zeigt eine schematische Darstellung eines Dachs 123 eines Fahrzeugs 122 gemäß Ausführungsformen, insbesondere das Dach 123 eines Personenkraftwagens. Das Dach 123 weist eine Dachöffnung 124 auf, die durch ein Panel 101 verschlossen ist. Das Panel ist an seinem Rand 126 ganz oder teilweise von einer Umrandung 104 umgeben.

Das Panel 101 ist beispielsweise ein Glas- oder Kunststoffdeckel, der relativ zum Dach 123 unbeweglich angeordnet ist und die Dachöffnung 104 verschließt. Gemäß weiteren Ausführungsformen ist das Panel 101 relativ zu dem Dach 123 bewegbar, um die Dachöffnung 124 im Betrieb teilweise freizugeben oder wahlweise zu schließen. Beispielsweise ist das Panel 101 Teil eines Panoramadachs, eines Spoilerdachs, eines Schiebedachs, beispielsweise eines außengeführten Schiebedachs, und/oder eines Schiebe-/Hebedachs und/oder einem Festdachelement. Gemäß Ausführungsformen ist das Panel 101 mit weiteren Elementen von der Innenseite des Fahrzeugs 122 her an dem Dach 123 montierbar. Gemäß Ausführungsformen ist das Panel 101 mit weiteren Elementen von der Außenseite des Fahrzeugs 122 her an dem Dach 123 montierbar.

Der Deckel, der an der Dachöffnung 104 angeordnet ist, weist gemäß nicht explizit dargestellten Ausführungsformen zwei oder mehr Panele 101 auf. Beispielsweise ist eines der Panele 101 relativ zum Dach 123 unbeweglich angeordnet und ein weiteres der Panele relativ zum Dach 123 beweglich angeordnet. Jedes Panel 101 wird gemäß Ausführungsformen an seinem Rand 126 ganz oder teilweise von einer Umrandung 104 umgeben. Gemäß weiteren Ausführungsformen wird ein Teil der Panele 101 an seinem Rand 126 ganz oder teilweise von einer Umrandung 104 umgeben. Ein weiterer Teil der Panele 101 weist keine Umrandung auf oder eine zur Umrandung 104 unterschiedlich ausgebildete Umrandung.

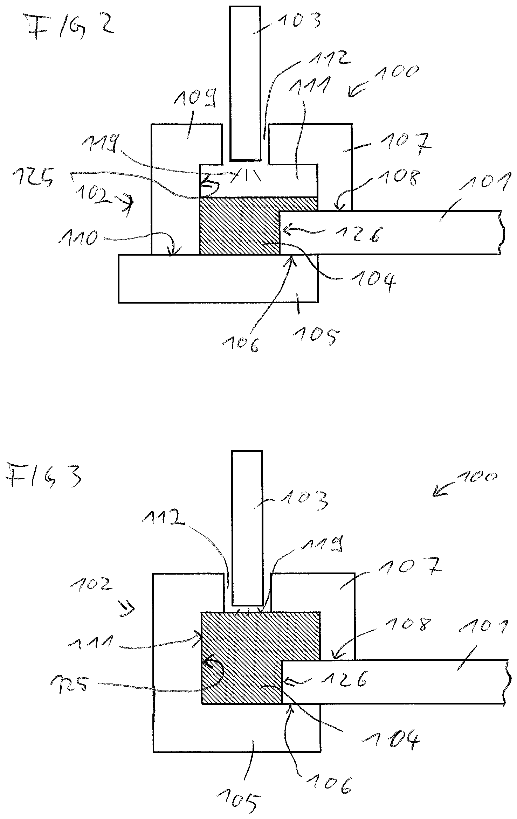

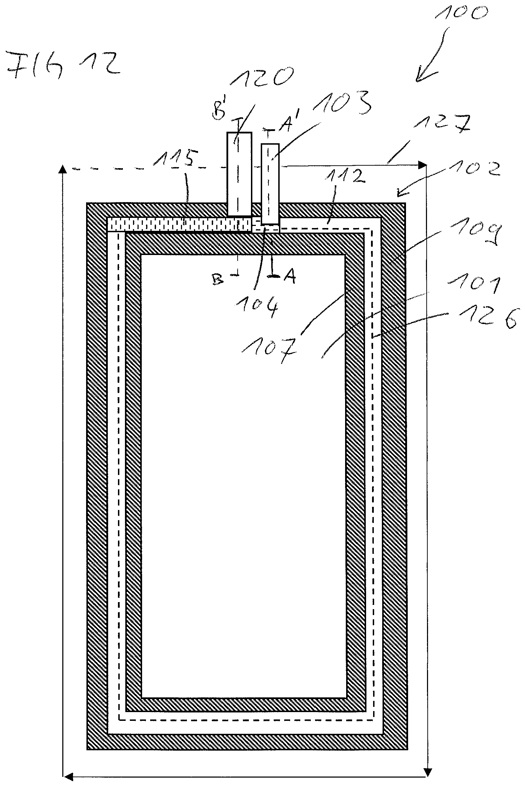

Figur 2 zeigt eine schematische Darstellung eines Querschnitts durch eine Vorrichtung 100 zur Herstellung der Umrandung 104 gemäß Ausführungsformen. Die Darstellung entspricht einem schematischen Schnitt entlang der Linie A-A' der Figur 12 quer zur Hauptausbreitungsrichtung des Panels 101.

Die Vorrichtung 100 weist ein Formwerkzeug 102 auf. Das Formwerkzeug 102 umfasst einen ersten Formkörper 105 mit einem Haltebereich 106 für das Panel 101. Ein zweiter Formkörper 107 weist einen Haltebereich 108 für das Panel 101 auf. Ein dritter Formkörper 109 ist so angeordnet, dass der erste Formkörper 105 und der dritte Formkörper 109 einen gemeinsamen Kontaktbereich 110 aufweisen. Zwischen dem zweiten Formkörper 107 und dem dritten Formkörper 109 ist ein Zugangskanal 112 zu einem Raum 111 ausgebildet. Der Raum 111 wird in dem dargestellten Querschnitt durch das Panel 101, den ersten Formkörper 105, den zweiten Formkörper 107 und den dritten Formkörper 109 begrenzt, wobei der Zugangskanal 112 freibleibt. Innenflächen 125 der drei Formkörper 105, 107 und 109 sind entsprechend einer gewünschten äußeren Form der Umrandung 104 ausgebildet.

Zur Herstellung der Umrandung 104 wird ein Materialspender 103 durch den Zugangskanal 112 zumindest teilweise in das Formwerkzeug 102 eingebracht. Der Materialspender 103 bringt das Material 119 für die Umrandung 104 in den Raum 111 ein. Dabei wird der Materialspender 103 relativ zu dem Formwerkzeug 102 und dem Panel 101 entlang eines Rands 126 des Panels 101 durch den Zugangskanal 112 bewegt. Der Materialspender 103 wird so bewegt, dass der Raum 111 nach und nach vollständig oder nahezu vollständig gefüllt wird. Beispielsweise ist die Vorrichtung 100 schräg angeordnet, sodass das Material innerhalb des Raums 111 vor dem Aushärten durch die Schwerkraft in eine einer Bewegungsrichtung 127 (Figur 12) des Materialspenders 103 entgegengesetzte Richtung bewegt wird. Dadurch ist eine möglichst gute Füllung des Raums 111 möglich. In Bewegungsrichtung 127 vor dem Materialspender 103 ist der Raum 111 nicht und nur kaum mit dem Material 119 gefüllt. In Bewegungsrichtung 127 hinter dem Materialspender 103 ist der Raum 111 mit dem Material 119 gefüllt.

Das Material 119 umfasst beispielsweise Polyurethan. Das Material 119 wird in einem ersten Zustand durch den Materialspender 103 in den Raum 101 eingebracht und härtet nachfolgend aus. Im Raum 111 herrscht im Wesentlichen Atmosphärendruck oder ein Druck, der nur unwesentlich höher als Atmosphärendruck ist. Dadurch müssen auch die Formkörper 105, 107 und 109 nicht fest aneinander beziehungsweise an das Panel 101 gedrückt werden. Dadurch können Beschädigungen vermieden werden. Zudem können weichere Materialien verwendet werden, die hohen Drücken nicht standhalten würden.

Das Material 119 hat eine niedrige dynamische Viskosität. Beispielsweise hat das Material 119 eine dynamische Viskosität von weniger als 200 kg/(m . s), beispielsweise weniger als 50 kg/(m . s), insbesondere weniger als 15 kg/(m . s) (jeweils bei einer Schergeschwindigkeit von 1/s) .

Die drei Formkörper 105, 107 und 109 sind separat zueinander ausgebildete Bauelemente. Insbesondere sind die Formkörper 105, 107 und 109 jeweils relativ zueinander bewegbar. Während des Einbringens des Materials 119 in den Raum werden die Formkörper 105, 107 und 109 vorzugsweise nicht relativ zueinander bewegt. Der dritte Formkörper 109 ist nicht in Kontakt mit dem Panel 101. Der dritte Formkörper 109 dient nicht zum Halten des Panels 101. Der dritte Formkörper 109 dient zum Ausbilden der äußeren Form der Umrandung 104 in dem Bereich, der mit der Innenfläche 125 des dritten Formkörpers 109 korrespondiert. Durch ein Austauschen beispielsweise des dritten Formkörpers 109 sind unterschiedliche Formen für die Umrandung einfach realisierbar. Dabei können die beiden Formkörper 105 und 107 beibehalten werden. Somit sind mit einer Vorrichtung 100 unterschiedliche Formen für die Umrandung 104 einfach realisierbar.

Die Innenflächen 125 der drei Formkörper 105, 107 und 109 sind gemäß Ausführungsformen zumindest in den Bereichen, an denen sie mit dem Material 119 der Umrandung 104 in Kontakt gelangen, so ausgebildet, dass die Umrandung 104 nach dem Aushärten nicht oder nicht wesentlich an den Innenflächen 125 anhaftet. Beispielsweise sind die Innenflächen 125 silikonbeschichtet.

Figur 3 zeigt die Vorrichtung gemäß weiteren Ausführungsformen. Die Vorrichtung gemäß den Ausführungsbeispielen der Figur 3 entspricht im Wesentlichen den Ausführungsformen wie in Verbindung mit den vorhergehenden Figuren erläutert. Im Unterschied zu den Ausführungsformen wie in Verbindung mit Figur 2 erläutert umfasst das Formwerkzeug 102 gemäß den Ausführungsformen der Figur 3 nur zwei Formkörper 105 und 107. Zudem ist das Verfahren in einem in Bezug auf die Darstellung der Figur 2 spätere Zeitpunkt dargestellt, in dem der dargestellte Bereich des Raums 111 bereits vollständig mit dem Material 119 gefüllt ist.

Der erste Formkörper 105 weist den Haltebereich 106 auf. Darauf ist das Panel 101 angeordnet. Zudem wird das Panel von dem zweiten Formkörper 107 beziehungsweise dem Haltebereich 108 gehalten. Der Raum 111 wird von dem Panel 101 sowie den Innenflächen 125 der beiden Formkörper 105 und 107 begrenzt. Der Zugangskanal 112 bleibt dabei frei, sodass das Material 119 mittels des Materialspenders 103 in den Raum 111 eingebracht werden kann. Der Zugangskanal 112 ist zwischen dem ersten Formkörper 105 und dem zweiten Formkörper 107 ausgebildet.

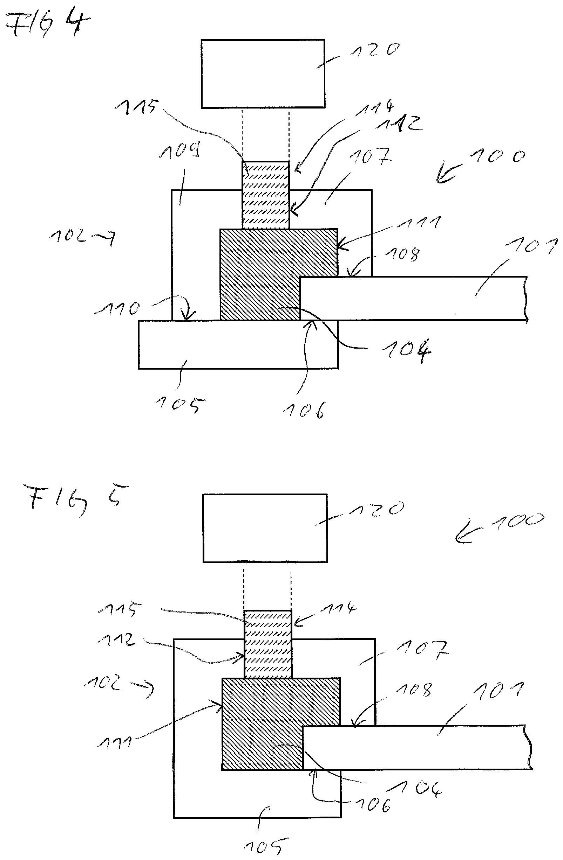

Figur 4 zeigt die Vorrichtung 100 gemäß Figur 2 nachdem der Materialspender 103 den dargestellten Querschnitt passiert hat. Die Darstellung entspricht einem schematischen Schnitt entlang der Linie B-B' der Figur 12 quer zur Hauptausbreitungsrichtung des Panels 101. Der dargestellte Bereich des Raums 111 ist vollständig mit dem Material 119 der Umrandung 104 gefüllt.

Eine Abgabevorrichtung 120 ist vorgesehen, um ein Verschlusselement 114 in den Zugangskanal 112 einzubringen. Das Verschlusselement 114 verschließt den Zugangskanal 112 so, dass ein geschlossener Raum 111 entsteht. Beispielsweise ist das Verschlusselement 114 ein flexibles Dichtband 115.

In Bewegungsrichtung 127 des Materialspenders 103 hinter dem Materialspender 103 wird das Verschlusselement 114 in den Zugangskanal 112 eingelegt. In Bewegungsrichtung 127 des Materialspenders 103 vor dem Materialspender ist der Zugangskanal 112 frei und offen, sodass der Materialspender 103 ungehindert durch den Zugangskanal 112 bewegt wird. Durch das Verschließen des Zugangskanals 112 nachdem der Raum 111 mit dem Material 119 für die Umrandung 104 gefüllt ist, ist ein Aushärten des Materials in einem geschlossenen Raum 111 ermöglicht. Dadurch ist eine präzise Ausformung an allen Außenseiten der Umrandung 104 ermöglicht. Undefinierte Oberflächen, die ohne formgebende Begrenzung aushärten, werden vermieden.

Nach dem das Material 119 der Umrandung 104 ausgehärtet ist, können die Formkörper 105, 107 und 109 sowie das Verschlusselement 114 entfernt werden und das Panel 101 mit der Umrandung 104 weiterverarbeitet werden.

Das Verschlusselement 114 hat keinen Kontakt zu den Formkörpern 107 und 109, die den Zugangskanal 112 umgeben, bevor es in den Zugangskanal 112 eingebracht wird. Solange der Zugangskanal 112 frei und offen ist, ist das Verschlusselement 114 beabstandet zu den Formkörpern 105, 107 und 109 angeordnet. Erst vor dem Einbringen des Materials 119 in den Raum 111 ist der Zugangskanal 112 offen. Nach der Passage des Materialspenders 103 wird der Zugangskanal 112 durch das Verschlusselement 114 verschlossen. Somit ist zunächst ein offenes Formwerkzeug 102 gegeben, das nach dem Einbringen des Materials 119 in den Raum 111 ein geschlossenes Formwerkzeug wird.

Figur 5 zeigt die Vorrichtung 100 der Figur 3 zu einem späteren Zeitpunkt korrespondierend zu Figur 4. Der Zugangskanal 112, der von dem Formkörper 105 und dem Formkörper 107 umgeben wird, ist durch das Verschlusselement 114 verschlossen, nachdem der Raum 111 vollständig mit dem Material 119 der Umrandung 104 gefüllt ist. Das Verschlusselement 114 ist beispielsweise so ausgeführt, wie in Verbindung mit Figur 4 erläutert.

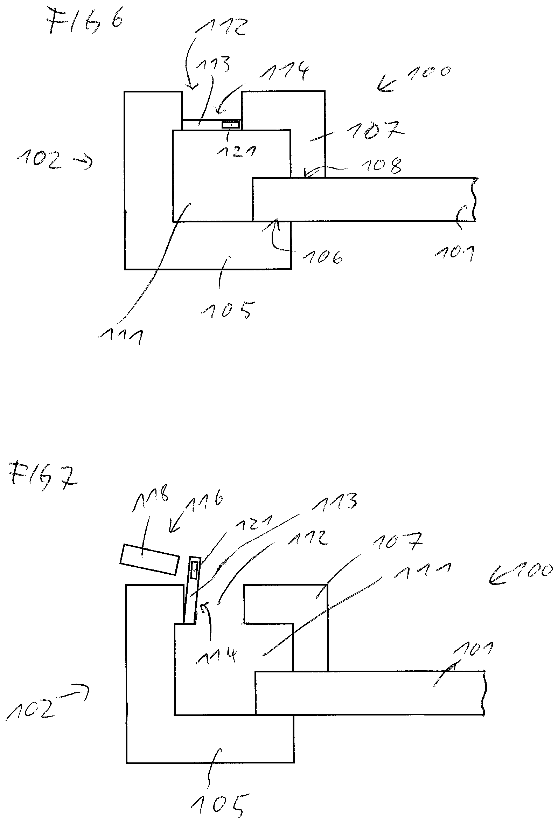

Figuren 6 bis 9 zeigen die Vorrichtung 100 gemäß weiteren Ausführungsformen. Die Vorrichtung 100 gemäß Figur 6 entspricht im Wesentlichen der Vorrichtung 100 wie in Zusammenhang mit Figur 3 erläutert. Im Unterschied zu den Ausführungsbeispielen der Figur 3 ist das Verschlusselement 114 an dem ersten Formkörper 105 fixiert. Das Verschlusselement 114 ist schon vor der Passage des Materialspenders 103 in dem Zugangskanal 112 angeordnet.

Figuren 6 bis 9 zeigen ein Formwerkzeug 102 mit zwei Formkörpern 105 und 107. Das in diesem Zusammenhang beschriebene Verschlusselement 114 und das korrespondierende Verfahren zum Befüllen des Raumes 111 ist genauso bei einem Formwerkzeug 102 anwendbar, das die drei Formkörper 105, 107 und 109 aufweist. Das Verschlusselement 114 ist dann beispielsweise am dritten Formkörper 109 und/oder am zweiten Formkörper 107 fixiert.

Gemäß den Ausführungsbeispielen der Figuren 6 bis 9 ist das Verschlusselement 114 an dem ersten Formkörper 105 fixiert. Gemäß weiteren Ausführungsformen ist das Verschlusselement 114 an dem zweiten Formkörper 107 fixiert (nicht gezeigt). Gemäß weiteren Ausführungsformen ist das Verschlusselement 114 zweiteilig (nicht gezeigt). Ein Teil ist an dem ersten Formkörper 105 fixiert und der zweite Teil an dem zweiten Formkörper 107.

Das Verschlusselement 114 ist beispielsweise eine elastische beziehungsweise flexible Lippendichtung 113. Die Lippendichtung 113 verschließt den Zugangskanal 112, sodass ein geschlossener Raum 111 ausgebildet ist.

Zum Befüllen des Raums 111 wird das Verschlusselement 114 aus seiner Ruheposition ausgelenkt, sodass der Zugangskanal 112 freigegeben ist. Zum Bewegen des Verschlusselements 114 ist eine Öffnungsvorrichtung 116 vorgesehen. Die Öffnungsvorrichtung 116 umfasst beispielsweise eine Magnetvorrichtung 118, die ausgebildet ist, Magnetkräfte auf einen Magnet 121 auszuwirken. Der Magnet 121 ist Teil des Verschlusselements 114. Durch die Magnetkräfte wird das Verschlusselement 114 so bewegt, dass der Zugangskanal 112 freigegeben ist. In weiteren Ausführungsformen ist die Öffnungsvorrichtung 116 anders ausgebildet, um eine Kraft auf das Verschlusselement 114 auszuüben und dadurch das Verschlusselement 114 aus der Ruheposition zu bewegen. Beispielsweise ist eine Druckluftvorrichtung vorgesehen oder eine Vakuumvorrichtung. Alternativ oder zusätzlich ist eine Hebevorrichtung vorgesehen, die in Kontakt mit dem Verschlusselement gelangt, um das Verschlusselement mechanisch zu bewegen.

Die Öffnungsvorrichtung 116 bewegt das Verschlusselement 114 gemäß Ausführungsformen nur abschnittsweise. Nur in dem Bereich, in dem der Materialspender 103 sich bewegt und kurz davor und dahinter ist das Verschlusselement 114 ausgelenkt und der Zugangskanal 112 freigegeben. In Bewegungsrichtung 127 des Materialspenders 103 davor und dahinter ist das Verschlusselement 114 in seiner Ruheposition und der Zugangskanal 112 geschlossen. Dazu bewegt sich die Öffnungsvorrichtung 116 beispielsweise gemeinsam mit dem Materialspender 103 entlang des Formwerkzeugs 102.

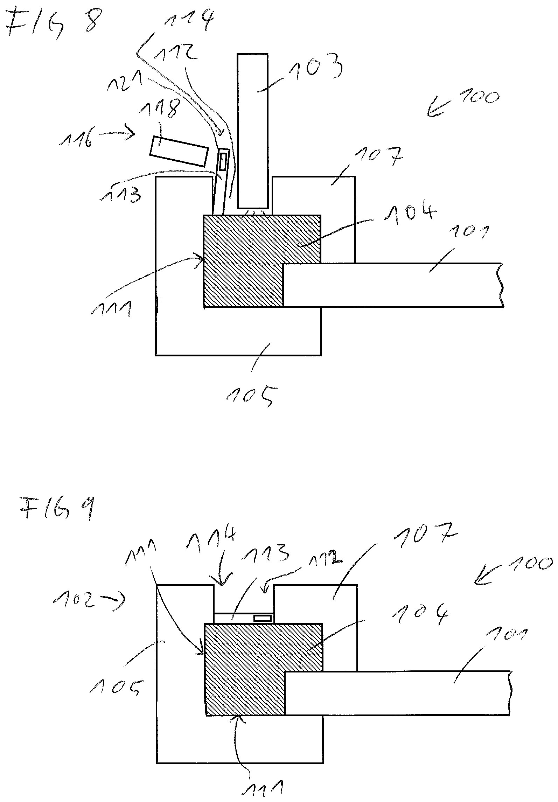

In dem Bereich, in dem der Zugangskanal 112 freigegeben ist, ist der Materialspender 103 angeordnet wie in Figur 8 schematisch dargestellt. Der Bereich, in dem der Zugangskanal 112 freigegeben ist, und der Materialspender 103 bewegen sich insbesondere gemeinsam entlang des Randes 126 des Panels 101.

Das Verschlusselement 114 wird durch die Öffnungsvorrichtung 116 so gehalten, dass der Zugangskanal 112 offen ist. Dabei ist das Verschlusselement 114 gemäß Ausführungsformen beabstandet zu dem Materialspender 103 angeordnet. Der Materialspender 103 ist nicht in Kontakt mit dem Verschlusselement 114, um den Zugangskanal 112 zu öffnen.

Nach der Passage des Materialspenders 103 gibt die Öffnungsvorrichtung 116 das Verschlusselement 114 wieder frei, wie in Figur 9 schematisch dargestellt. Das Verschlusselement 114 bewegt sich wieder in seinen Ruhezustand und verschließt den Zugangskanal 112. Somit ist nach der Passage des Materialspenders 103 der Raum 111 im Querschnitt an allen Seiten geschlossen. Das Material 119 der Umrandung 104 härtet somit in einem geschlossenen Formwerkzeug 102 aus.

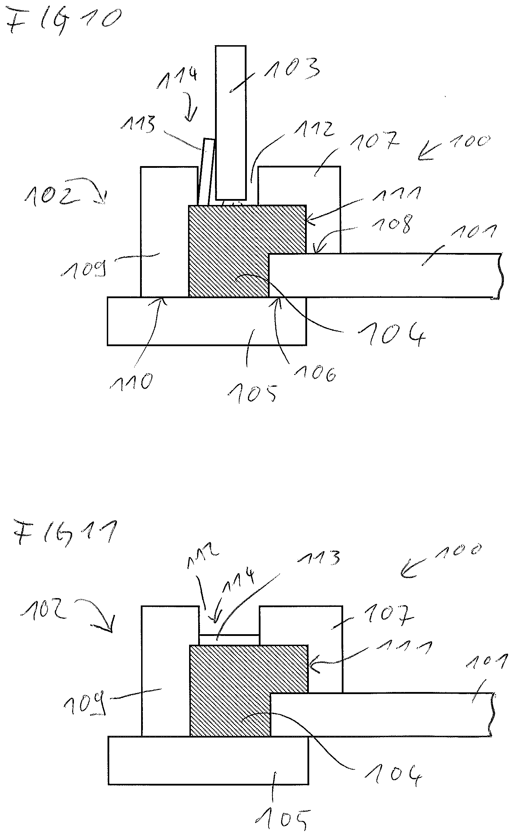

Figuren 10 und 11 zeigen die Vorrichtung 100 wie in Figur 2 erläutert gemäß weiteren Ausführungsformen. In Unterschied zu Figur 2 ist das Verschlusselement 114 fest an dem dritten Formkörper 109 fixiert.

Figuren 10 und 11 zeigen ein Formwerkzeug 102 mit drei Formkörpern 105, 107 und 109. Das erläuterte Verschlusselement 114 und das korrespondierende Verfahren zum Befüllen des Raums 111 ist entsprechend auch mit dem Formwerkzeug 102 mit zwei Formkörpern 105 und 107 anwendbar.

Das Verschlusselement 114 entspricht im Wesentlichen dem Verschlusselement 114 wie in Verbindung mit den Figuren 6 bis 9 erläutert. Im Unterschied zu den Ausführungsformen der Figuren 6 bis 9 wird das Verschlusselement 114 gemäß den Figuren 10 und 11 nicht durch eine separate Öffnungsvorrichtung 116 geöffnet. Der Materialspender 103 ist beim Passieren in Kontakt mit dem Verschlusselement 114 und lenkt dieses aus. Vor und nach der Passage des Materialspenders 103 ist der Zugangskanal 112 mittels des Verschlusselements 114 geschlossen.

Der geschlossene Raum 111 nach der Passage des Materialspenders 103 zum Aushärten und Ausformen des Materials 119 der Umrandung 104 ist schematisch in Figur 11 dargestellt. Das Verschlusselement 114 begrenzt den Raum 111 am Zugangskanal 112. Somit ist auch am Zugangskanal 112 die Form der Umrandung 104 fest vorgegeben.

Das Verschlusselement 114 ist in den dargestellten Ausführungsformen an dem dritten Formkörper 109 fixiert, der nicht in Kontakt mit dem Panel 101 ist. Somit ist das Verschlusselement 114 gemeinsam mit dem Formkörper 109 einfach austauschbar, wobei die beiden Formkörper 105 und 107 beibehalten werden, die zum Halten des Panels 101 ausgebildet sind. Dadurch ist eine hohe Flexibilität für die äußere Form der Umrandung 104 gegeben. Gemäß weiteren Ausführungsformen ist das Verschlusselement 114 an dem zweiten Formkörper 107 fixiert. Gemäß weiteren Ausführungsformen ist das Verschlusselement 114 mehrteilig. Beispielsweise ist ein Teil des Verschlusselements 114 an dem zweiten Formkörper 107 angeordnet und ein zweiter Teil an dem dritten Formkörper 109.

Figur 12 zeigt schematisch eine Aufsicht auf die Vorrichtung 100 gemäß den Ausführungsformen der Figuren 2 und 4. Wenn statt dem Dichtband 115 ein anderes Verschlusselement 114 vorgesehen ist, beispielsweise die Lippendichtung 113 wie in Zusammenhang mit Figuren 6 bis 9 oder Figuren 10 und 11 erläutert, kann auf die Abgabevorrichtung 120 verzichtet werden. Zudem ist dann der Zugangskanal 112 nicht wie in Figur 12 dargestellt in Bewegungsrichtung 127 vor dem Materialspender 103 offen sondern von der Lippendichtung 113 verschlossen. Der Zugangskanal 112 ist dann nur in einem Bereich unmittelbar an dem Materialspender 103 geöffnet.

Der Materialspender 103 bewegt sich in der Bewegungsrichtung 127 entlang des Randes 126 um das Panel 101. Dabei wird der Raum 111 mit dem Material 119 der Umrandung 104 gefüllt. Der Raum 111 füllt sich in Bewegungsrichtung 127.

In Ausführungsformen wird der Rand 126 nicht vollständig mit der Umrandung 104 versehen. Dann ist gemäß Ausführungsformen das Formwerkzeug 102 auch nur Abschnittsweise an dem Panel 101 angeordnet.

In Bewegungsrichtung 127 hinter dem Materialspender 103 wird die Abgabevorrichtung 120 entlang des Zugangskanals 112 bewegt. Der Teil des Raums 111, der bereits mit dem Material 119 der Umrandung 104 gefüllt ist, wird durch das Dichtband 115 abgedeckt.

Die in den Ausführungsbeispielen beziehungsweise Ausführungsformen gezeigten und beschriebenen Merkmale können gemäß weiteren, nicht explizit dargestellten Ausführungsbeispielen auch in weiteren Zusammenstellungen miteinander kombiniert sein. Die Erfindung umfasst insbesondere jede Kombination von Merkmalen aus den Figuren und den Patentansprüchen, auch wenn dieses Merkmal oder diese Kombination selbst nicht explizit in den Patentansprüchen oder den Ausführungsbeispielen angegeben ist.

Beispielsweise ist eine Öffnungsvorrichtung 116 gemeinsam mit einem Dichtband 115 möglich. Das Dichtband 115, das nicht an den Formkörpern 105, 107 und 109 fixiert ist, ist dann schon vor der Passage des Materialspenders 103 in dem Zugangskanal 112 angeordnet. Durch die Öffnungsvorrichtung 116 wird das Dichtband 115 aus dem Zugangskanal 112 bewegt, um den Zugangskanal für den Materialspender 103 bereichsweise zu öffnen.

Die Vorrichtung 100 und insbesondere das Formwerkzeug 102 dienen in den jeweiligen Ausführungsbeispielen zur Herstellung der Umrandung 104 als so genannte Umschäumung und/oder so genanntem Umguss. Beispielsweise, wenn im Raum 111 im Wesentlichen Atmosphärendruck oder ein Druck herrscht, der nur unwesentlich höher als Atmosphärendruck ist, während das Material 119 aushärtet, wird von einem Umgießen des Panels 101 gesprochen. Dies ist beispielsweise der Fall, wenn das Material 119 in dem Raum 111 aushärtet, ohne dabei sein Volumen wesentlich zu vergrößern. Beispielsweise, wenn das Material 119 ein Polyurethan umfasst und eine weitere Komponente, um das Polyurethan aufzuschäumen, wird von einem Umschäumen des Panels 101 gesprochen. Dabei vergrößert sich das Volumen des in den Raum 111 eingebrachten Materials 119 während des Aushärtens und es werden beispielsweise Gaseinschlüsse in der Umrandung 104 ausgebildet. Das Verschlusselement 114 und die Kopplung des Verschlusselements 114 mit den Formköpern sind in diesen Fällen insbesondere entsprechend ausgebildet, um beispielsweise einen Gasaustritt aus dem Raum 111 während des Aushärtens zu ermöglichen. Das Verschlusselement 114 und die Kopplung des Verschlusselements 114 mit den Formköpern sind in diesen Fällen insbesondere entsprechend ausgebildet, um beispielsweise ein Entweichen des Materials 119 aus dem Raum 111 während des Aushärtens zu verhindern.

Die dargestellten Ausformungen der Innenflächen 125 der Formkörper 105, 107 und 109 sowie der Verschlusselemente 114 sind nur exemplarisch schematisch zu verstehen. Die Innenflächen 125 können beliebig ausgeformt sein, um eine vorgegebene Form für die Umrandung 104 zu realisieren. Die Innenflächen 125 sind in Abhängigkeit von der vorgegebenen äußeren Form für die Umrandung 104 ausgestaltet.

Das Formwerkzeug 102 weist gemäß weiteren Ausführungsformen mehr als drei Formkörper auf. Zwei Formkörper dienen beispielsweise zum Halten des Panels 101 und die weiteren Formkörper dienen zum Ausbilden des Raums 111 entsprechend der vorgegebenen Form für die Umrandung 104.

## Patentansprüche

1. Vorrichtung zur Herstellung einer Umrandung (104) eines flächig ausgedehnten Panels (101), aufweisend:
- ein Formwerkzeug (102),
- einen Materialspender (103) zum Aufspenden eines Materials (119) für die Umrandung (104), wobei das Formwerkzeug (102) aufweist:
- einen ersten Formkörper (105) mit einem Haltebereich (106) für das Panel (101),
- einen zweiten Formkörper (107) mit einem Haltebereich (108) für das Panel (101) so, dass das Panel (101) von dem ersten (105) und dem zweiten (107) Formköper haltbar ist,
- einen dritten Formkörper (109), der mit dem ersten Formkörper (105) einen gemeinsamen Kontaktbereich (105) aufweist, wobei der erste (105), der zweite (107) und der dritte (108) Formkörper so ausgebildet sind, dass sie zusammen mit dem Panel (101) einen Raum (111) umgeben, in dem die Umrandung (104) ausbildbar ist,
- einen Zugangskanal (112) zu dem Raum (111), der zwischen dem zweiten (107) und dem dritten (109) Formkörper ausgebildet ist, wobei der Materialspender (102) relativ zu dem Formwerkzeug (102) bewegbar ist, **gekennzeichnet dadurch, dass** eine elastische Lippendichtung (113) an dem zweiten (107) und/oder dem dritten (109) Formkörper fixiert ist, um den Zugangskanal (112) zu schließen und zeitweise freizugeben.

2. Vorrichtung nach Anspruch 1, bei der der zweite (107) und der dritte (109) Formkörper relativ zueinander bewegbar angeordnet sind.

3. Vorrichtung nach einem der Ansprüche 1 oder 2, umfassend ein separates Verschlusselement (114), das in den Zugangskanal (112) einbringbar ist, um den Zugangskanal (112) zu schließen so, dass der Raum (111) ein geschlossener Raum (111) ist.

4. Vorrichtung zur Herstellung einer Umrandung (104) eines flächig ausgedehnten Panels (101), aufweisend:
- ein Formwerkzeug (102),
- einen Materialspender (103) zum Aufspenden eines Materials (119) für die Umrandung (104), wobei das Formwerkzeug (102) aufweist:
- einen ersten Formkörper (105) mit einem Haltebereich (106) für das Panel (101),
- einen zweiten Formkörper (107) mit einem Haltebereich (108) für das Panel (101) so, dass das Panel (101) von dem ersten (105) und dem zweiten (107) Formköper haltbar ist,
wobei der erste (105) und der zweite (107) Formkörper so ausgebildet sind, dass sie zusammen mit dem Panel (101) einen Raum (111) umgeben, in dem die Umrandung (104) ausbildbar ist,
- einen Zugangskanal (112) zu dem Raum (111), der zwischen dem ersten (105) und dem zweiten (107) Formkörper ausgebildet ist, **gekennzeichnet durch**
- ein separates Verschlusselement (114), das in den Zugangskanal (112) einbringbar ist, um den Zugangskanal (112) zu schließen so, dass der Raum (111) ein geschlossener Raum (111) ist, und **dadurch, dass** der Materialspender (102) relativ zu dem Formwerkzeug (102) bewegbar ist.

5. Vorrichtung nach Anspruch 3 oder 4, bei dem das Verschlusselement (114) ein flexibles Dichtband (115) ist.

6. Vorrichtung zur Herstellung einer Umrandung (104) eines flächig ausgedehnten Panels (101), aufweisend:
- ein Formwerkzeug (102),
- eine Öffnungsvorrichtung (116), und
- einen Materialspender (103) zum Aufspenden eines Materials (119) für die Umrandung (104), wobei das Formwerkzeug (102) aufweist:
- einen ersten Formkörper (105) mit einem Haltebereich (106) für das Panel (101),
- einen zweiten Formkörper (107) mit einem Haltebereich (108) für das Panel (101) so, dass das Panel (101) von dem ersten (105) und dem zweiten (107) Formköper haltbar ist,
wobei der erste (105) und der zweite (107) Formkörper so ausgebildet sind, dass sie zusammen mit dem Panel (101) einen Raum (111) umgeben, in dem die Umrandung (104) ausbildbar ist,
- einen Zugangskanal (112) zu dem Raum (111), der zwischen dem ersten (105) und dem zweiten (107) Formkörper ausgebildet ist, **gekennzeichnet durch**
- ein bewegliches Verschlusselement (114), das an dem ersten (105) und/oder dem zweiten (107) Formkörper fixiert ist, um den Zugangskanal (112) zu schließen und zeitweise freizugeben, wobei
- die Öffnungsvorrichtung (116) separat zu dem Materialspender (103) ausgebildet ist, um das Verschlusselement (114) für das Freigeben des Zugangskanals (112) zu bewegen, und **dadurch, dass** der Materialspender (102) relativ zu dem Formwerkzeug (102) bewegbar ist.

7. Vorrichtung nach Anspruch 6, bei der die Öffnungsvorrichtung (116) eine Druckluftvorrichtung aufweist, um das Verschlusselement (114) mittels Druckluft zu bewegen.

8. Vorrichtung nach Anspruch 6 oder 7, bei der die Öffnungsvorrichtung (116) eine Magnetvorrichtung (118) aufweist, um das Verschlusselement (114) mittels Magnetkraft zu bewegen.

9. Vorrichtung nach einem der Ansprüche 6 bis 8, bei der die Öffnungsvorrichtung (116) eine Hebevorrichtung aufweist, um das Verschlusselement mechanisch zu bewegen.

10. Verfahren zur Herstellung einer Umrandung (104) eines flächig ausgedehnten Panels (101), umfassend:
- Bereitstellen des Panels (101),
- Bereitstellen eines ersten Formkörpers (105),
- Auflegen des Panels (101) auf den ersten Formkörper (105),
- Anordnen eines zweiten Formkörpers (107) auf dem Panel (101),
- Anordnen eines dritten Formkörpers (109) so, dass der dritte Formkörper (109) mit dem ersten Formkörper (105) in Kontakt ist, wobei ein Raum (111) zwischen dem ersten (105), dem zweiten (107) und dem dritten (109) Formkörper mit einem Zugangskanal (112) zwischen dem zweiten (107) und dem dritten (109) Formkörper ausgebildet wird,
- Einbringen eines Materials (119) für die Umrandung (104) in den Raum (111) durch den Zugangskanal (112) mittels eines Materialspenders (102), der relativ zu dem Formwerkzeug (102) bewegt wird, **gekennzeichnet durch**
- Bewegen einer elastischen Lippendichtung (113), die an dem zweiten (107) und/oder dem dritten (109) Formkörper fixiert ist, und dadurch Freibeben des Zugangskanals (112),
- Einbringen des Materials (119) durch den freigegebenen Zugangskanal (112),
- Schließen des Zugangskanals (112).

11. Verfahren nach Anspruch 10, umfassend:
- Einlegen eines separaten Verschlusselements (114) in den Zugangskanal (112) nach dem Einbringen des Materials (119) in den Raum (111), um den Zugangskanal (112) zu schließen, und dadurch Schließen des Raums (111).

12. Verfahren zur Herstellung einer Umrandung (104) eines flächig ausgedehnten Panels (101), umfassend:
- Bereitstellen des Panels (101),
- Bereitstellen eines ersten Formkörpers (105),
- Auflegen des Panels (101) auf den ersten Formkörper (105),
- Anordnen eines zweiten Formkörpers (107) auf dem Panel (101), wobei ein Raum (111) zwischen dem ersten (105) und dem zweiten (107) Formkörper mit einem Zugangskanal (112) zwischen dem ersten (105) und dem zweiten (107) Formkörper ausgebildet wird,
- Einbringen eines Materials (119) für die Umrandung (104) in den Raum (111) durch den Zugangskanal (112),
- Einlegen eines separaten Verschlusselements (114) in den Zugangskanal (112) nach dem Einbringen des Materials (119) in den Raum (111), um den Zugangskanal (112) zu schließen, und dadurch Schließen des Raums (111).

13. Verfahren nach Anspruch 11 oder 12, umfassend:
- Einlegen eines flexiblen Dichtbands (115) in den Zugangskanal (112).

14. Verfahren zur Herstellung einer Umrandung (104) eines flächig ausgedehnten Panels (101), umfassend:
- Bereitstellen des Panels (101),
- Bereitstellen eines ersten Formkörpers (105),
- Auflegen des Panels (101) auf den ersten Formkörper (105),
- Anordnen eines zweiten Formkörpers (107) auf dem Panel (101), wobei ein Raum (111) zwischen dem ersten (105) und dem zweiten (107) Formkörper mit einem Zugangskanal (112) zwischen dem ersten (105) und dem zweiten (107) Formkörper ausgebildet wird,
- Bewegen eines Verschlusselements (114), das an dem ersten (105) und/oder dem zweiten (107) Formkörper fixiert ist, und dadurch Freibeben des Zugangskanals (112), wobei das Verschlusselement (114) mittels einer Öffnungsvorrichtung (116) bewegt wird, die separat zu einem Materialspender (103) zum Aufspenden eines Materials (119) für die Umrandung (104) ausgebildet ist,
- Einbringen des Materials (119) in den Raum (111) durch den freigegebenen Zugangskanal (112) mittels des Materialspenders,
- Schließen des Zugangskanals (112).

## Claims

1. Device for producing a bordering (104) of a panel (101) of planar extent, having:
- a moulding tool (102),
- a material dispenser (103) for dispensing a material (119) for the bordering (104), wherein the moulding tool (102) has:
- a first moulding body (105) having a holding region (106) for the panel (101),
- a second moulding body (107) having a holding region (108) for the panel (101) such that the panel (101) can be held by the first moulding body (105) and the second moulding body (107),
- a third moulding body (109), which has a common contact region (105) with the first moulding body (105), wherein the first moulding body (105), the second moulding body (107) and the third moulding body (108) are formed such that together with the panel (101) they surround a space (111) in which the bordering (104) can be formed,
- an access channel (112) to the space (111), which access channel (112) is formed between the second moulding body (107) and the third moulding body (109), wherein the material dispenser (102) is movable relative to the moulding tool (102), **characterized in that** an elastic lip seal (113) is fixed to the second moulding body (107) and/or the third moulding body (109) in order to close and intermittently open up the access channel (112).

2. Device according to Claim 1, in which the second moulding body (107) and the third moulding body (109) are arranged so as to be movable relative to one another.

3. Device according to either of Claims 1 and 2, comprising a separate closure element (114), which can be introduced into the access channel (112) in order to close the access channel (112) such that the space (111) is a closed space (111) .

4. Device for producing a bordering (104) of a panel (101) of planar extent, having:
- a moulding tool (102),
- a material dispenser (103) for dispensing a material (119) for the bordering (104), wherein the moulding tool (102) has:
- a first moulding body (105) having a holding region (106) for the panel (101),
- a second moulding body (107) having a holding region (108) for the panel (101) such that the panel (101) can be held by the first moulding body (105) and the second moulding body (107),
wherein the first moulding body (105) and the second moulding body (107) are formed such that together with the panel (101) they surround a space (111) in which the bordering (104) can be formed,
- an access channel (112) to the space (111), which access channel (112) is formed between the first moulding body (105) and the second moulding body (107), **characterized by**
- a separate closure element (114), which can be introduced into the access channel (112) in order to close the access channel (112) such that the space (111) is a closed space (111), and in that the material dispenser (102) is movable relative to the moulding tool (102).

5. Device according to Claim 3 or 4, in which the closure element (114) is a flexible sealing strip (115).

6. Device for producing a bordering (104) of a panel (101) of planar extent, having:
- a moulding tool (102),
- an opening device (116), and
- a material dispenser (103) for dispensing a material (119) for the bordering (104), wherein the moulding tool (102) has:
- a first moulding body (105) having a holding region (106) for the panel (101),
- a second moulding body (107) having a holding region (108) for the panel (101) such that the panel (101) can be held by the first moulding body (105) and the second moulding body (107),
wherein the first moulding body (105) and the second moulding body (107) are formed such that together with the panel (101) they surround a space (111) in which the bordering (104) can be formed,
- an access channel (112) to the space (111), which access channel (112) is formed between the first moulding body (105) and the second moulding body (107), **characterized by**
- a movable closure element (114), which is fixed to the first moulding body (105) and/or the second moulding body (107) in order to close and intermittently open up the access channel (112), wherein
- the opening device (116) is formed separately from the material dispenser (103) in order to move the closure element (114) for opening up the access channel (112), and in that the material dispenser (102) is movable relative to the moulding tool (102).

7. Device according to Claim 6, in which the opening device (116) has a compressed-air device in order to move the closure element (114) by means of compressed air.

8. Device according to Claim 6 or 7, in which the opening device (116) has a magnet device (118) in order to move the closure element (114) by means of magnetic force.

9. Device according to one of Claims 6 to 8, in which the opening device (116) has a lifting device in order to move the closure element mechanically.

10. Method for producing a bordering (104) of a panel (101) of planar extent, comprising:
- providing the panel (101),
- providing a first moulding body (105),
- laying the panel (101) onto the first moulding body (105),
- arranging a second moulding body (107) on the panel (101),
- arranging a third moulding body (109) such that the third moulding body (109) is in contact with the first moulding body (105), wherein a space (111) between the first moulding body (105), the second moulding body (107) and the third moulding body (109) is formed with an access channel (112) between the second moulding body (107) and the third moulding body (109),
- introducing a material (119) for the bordering (104) through the access channel (112) into the space (111) by means of a material dispenser (102), which is moved relative to the moulding tool (102), **characterized by**
- moving an elastic lip seal (113), which is fixed to the second moulding body (107) and/or the third moulding body (109), and thereby opening up the access channel (112),
- introducing the material (119) through the opened-up access channel (112),
- closing the access channel (112).

11. Method according to Claim 10, comprising:
- inserting a separate closure element (114) into the access channel (112), after introducing the material (119) into the space (111), in order to close the access channel (112), and thereby closing the space (111).

12. Method for producing a bordering (104) of a panel (101) of planar extent, comprising:
- providing the panel (101),
- providing a first moulding body (105),
- laying the panel (101) onto the first moulding body (105),
- arranging a second moulding body (107) on the panel (101), wherein a space (111) between the first moulding body (105) and the second moulding body (107) is formed with an access channel (112) between the first moulding body (105) and the second moulding body (107),
- introducing a material (119) for the bordering (104) through the access channel (112) into the space (111),
- inserting a separate closure element (114) into the access channel (112), after introducing the material (119) into the space (111), in order to close the access channel (112), and thereby closing the space (111).

13. Method according to Claim 11 or 12, comprising:
- inserting a flexible sealing strip (115) into the access channel (112).

14. Method for producing a bordering (104) of a panel (101) of planar extent, comprising:
- providing the panel (101),
- providing a first moulding body (105),
- laying the panel (101) onto the first moulding body (105),
- arranging a second moulding body (107) on the panel (101), wherein a space (111) between the first moulding body (105) and the second moulding body (107) is formed with an access channel (112) between the first moulding body (105) and the second moulding body (107),
- moving a closure element (114), which is fixed to the first moulding body (105) and/or the second moulding body (107), and thereby opening up the access channel (112), wherein the closure element (114) is moved by means of an opening device (116) which is formed separately from a material dispenser (103) for dispensing a material (119) for the bordering (104),
- introducing the material (119) through the opened-up access channel (112) into the space (111) by means of the material dispenser,
- closing the access channel (112).

## Revendications

1. Dispositif de fabrication d'une bordure (104) d'un panneau s'étendant à plat (101), présentant :
- un outil de formage (102),
- un distributeur de matériau (103) pour distribuer un matériau (119) pour la bordure (104), l'outil de formage (102) présentant :
- un premier corps de formage (105) avec une région de retenue (106) pour le panneau (101),
- un deuxième corps de formage (107) avec une région de retenue (108) pour le panneau (101) de telle sorte que le panneau (101) puisse être retenu par le premier (105) et le deuxième (107) corps de formage,
- un troisième corps de formage (109) qui présente une zone de contact commune (105) avec le premier corps de formage (105), le premier (105), le deuxième (107) et le troisième (108) corps de formage étant réalisés de telle sorte qu'ils entourent conjointement avec le panneau (101) un espace (111) dans lequel peut être réalisée la bordure (104),
- un canal d'accès (112) à l'espace (111), qui est réalisé entre le deuxième (107) et le troisième (109) corps de formage, le distributeur de matériau (102) pouvant être déplacé par rapport à l'outil de formage (102), **caractérisé en ce qu'**un joint à lèvre élastique (113) est fixé sur le deuxième (107) et/ou le troisième (109) corps de formage, afin de fermer et d'ouvrir temporairement le canal d'accès (112).

2. Dispositif selon la revendication 1, dans lequel le deuxième (107) et le troisième (109) corps de formage sont disposés de manière déplaçable l'un par rapport à l'autre.

3. Dispositif selon l'une quelconque des revendications 1 et 2, comprenant un élément de fermeture séparé (114) qui peut être introduit dans le canal d'accès (112) afin de fermer le canal d'accès (112) de telle sorte que l'espace (111) soit un espace (111) fermé.

4. Dispositif de fabrication d'une bordure (104) d'un panneau s'étendant à plat (101), présentant :
- un outil de formage (102),
- un distributeur de matériau (103) pour distribuer un matériau (119) pour la bordure (104), l'outil de formage (102) présentant :
- un premier corps de formage (105) avec une région de retenue (106) pour le panneau (101),
- un deuxième corps de formage (107) avec une région de retenue (108) pour le panneau (101) de telle sorte que le panneau (101) puisse être retenu par le premier (105) et le deuxième (107) corps de formage,
le premier (105) et le deuxième (107) corps de formage étant réalisés de telle sorte qu'ils entourent conjointement avec le panneau (101) un espace (111) dans lequel peut être réalisée la bordure (104),
- un canal d'accès (112) à l'espace (111), qui est réalisé entre le premier (105) et le deuxième (107) corps de formage,
**caractérisé par**
- un élément de fermeture séparé (114) qui peut être introduit dans le canal d'accès (112) afin de fermer le canal d'accès (112) de telle sorte que l'espace (111) soit un espace (111) fermé, et en ce que le distributeur de matériau (102) peut être déplacé par rapport à l'outil de formage (102).

5. Dispositif selon la revendication 3 ou 4, dans lequel l'élément de fermeture (114) est une bande d'étanchéité flexible (115).

6. Dispositif de fabrication d'une bordure (104) d'un panneau s'étendant à plat (101), présentant :
- un outil de formage (102),
- un dispositif d'ouverture (116), et
- un distributeur de matériau (103) pour distribuer un matériau (119) pour la bordure (104), l'outil de formage (102) présentant :
- un premier corps de formage (105) avec une région de retenue (106) pour le panneau (101),
- un deuxième corps de formage (107) avec une région de retenue (108) pour le panneau (101) de telle sorte que le panneau (101) puisse être retenu par le premier (105) et le deuxième (107) corps de formage, le premier (105) et le deuxième (107) corps de formage étant réalisés de telle sorte qu'ils entourent conjointement avec le panneau (101) un espace (111) dans lequel peut être réalisée la bordure (104),
- un canal d'accès (112) à l'espace (111), qui est réalisé entre le premier (105) et le deuxième (107) corps de formage,
**caractérisé par**
- un élément de fermeture mobile (114) qui est fixé au premier (105) et/ou au deuxième (107) corps de formage afin de fermer et d'ouvrir temporairement le canal d'accès (112), où
- le dispositif d'ouverture (116) est réalisé de manière séparée du distributeur de matériau (103) afin de déplacer l'élément de fermeture (114) pour ouvrir le canal d'accès (112), et en ce que le distributeur de matériau (102) peut être déplacé par rapport à l'outil de formage (102).

7. Dispositif selon la revendication 6, dans lequel le dispositif d'ouverture (116) présente un dispositif à air comprimé afin de déplacer l'élément de fermeture (114) au moyen d'air comprimé.

8. Dispositif selon la revendication 6 ou 7, dans lequel le dispositif d'ouverture (116) présente un dispositif magnétique (118) afin de déplacer l'élément de fermeture (114) au moyen d'une force magnétique.

9. Dispositif selon l'une quelconque des revendications 6 à 8, dans lequel le dispositif d'ouverture (116) présente un dispositif de levage afin de déplacer mécaniquement l'élément de fermeture.

10. Procédé de fabrication d'une bordure (104) d'un panneau s'étendant à plat (101), comprenant les étapes suivantes:
- fourniture du panneau (101),
- fourniture d'un premier corps de formage (105),
- application du panneau (101) sur le premier corps de formage (105),
- disposition d'un deuxième corps de formage (107) sur le panneau (101),
- disposition d'un troisième corps de formage (109) de telle sorte que le troisième corps de formage (109) soit en contact avec le premier corps de formage (105), un espace (111) entre le premier (105), le deuxième (107) et le troisième (109) corps de formage étant réalisé avec un canal d'accès (112) entre le deuxième (107) et le troisième (109) corps de formage,
- introduction d'un matériau (119) pour la bordure (104) dans l'espace (111) à travers le canal d'accès (112) au moyen d'un distributeur de matériau (102) qui est déplacé par rapport à l'outil de formage (102),
**caractérisé par**
- le déplacement d'un joint à lèvre élastique (113) qui est fixé au deuxième (107) et/ou au troisième (109) corps de formage, et de ce fait l'ouverture du canal d'accès (112),
- l'introduction du matériau (119) à travers le canal d'accès (112) ouvert,
- la fermeture du canal d'accès (112).

11. Procédé selon la revendication 10, comprenant les étapes suivantes :
- introduction d'un élément de fermeture séparé (114) dans le canal d'accès (112) après l'introduction du matériau (119) dans l'espace (111) afin de fermer le canal d'accès (112), et de ce fait de fermer l'espace (111) .

12. Procédé de fabrication d'une bordure (104) d'un panneau s'étendant à plat (101), comprenant les étapes suivantes:
- fourniture du panneau (101),
- fourniture d'un premier corps de formage (105),
- application du panneau (101) sur le premier corps de formage (105),
- disposition d'un deuxième corps de formage (107) sur le panneau (101), un espace (111) entre le premier (105) et le deuxième (107) corps de formage étant réalisé avec un canal d'accès (112) entre le premier (105) et le deuxième (107) corps de formage,
- introduction d'un matériau (119) pour la bordure (104) dans l'espace (111) à travers le canal d'accès (112),
- introduction d'un élément de fermeture séparé (114) dans le canal d'accès (112) après l'introduction du matériau (119) dans l'espace (111) afin de fermer le canal d'accès (112), et de ce fait de fermer l'espace (111) .

13. Procédé selon la revendication 11 ou 12, comprenant l'étape suivante :
- introduction d'une bande d'étanchéité flexible (115) dans le canal d'accès (112).

14. Procédé de fabrication d'une bordure (104) d'un panneau s'étendant à plat (101), comprenant les étapes suivantes:
- fourniture du panneau (101),
- fourniture d'un premier corps de formage (105),
- application du panneau (101) sur le premier corps de formage (105),
- disposition d'un deuxième corps de formage (107) sur le panneau (101), un espace (111) entre le premier (105) et le deuxième (107) corps de formage étant réalisé avec un canal d'accès (112) entre le premier (105) et le deuxième (107) corps de formage,
- déplacement d'un élément de fermeture (114) qui est fixé au premier (105) et/ou au deuxième (107) corps de formage, et de ce fait ouverture du canal d'accès (112), l'élément de fermeture (114) étant déplacé au moyen d'un dispositif d'ouverture (116) qui est réalisé séparément d'un distributeur de matériau (103) pour distribuer un matériau (119) pour la bordure (104),
- introduction du matériau (119) dans l'espace (111) à travers le canal d'accès (112) ouvert, au moyen du distributeur de matériau,
- fermeture du canal d'accès (112).
